(19) **Europäisches Patentamt / European Patent Office / Office européen des brevets**

(11) **EP 4 694 310 A1**

(12) **EUROPEAN PATENT APPLICATION**
published in accordance with Art. 153(4) EPC

(43) Date of publication:
**11.02.2026 Bulletin 2026/07**

(21) Application number: **23929486.1**

(22) Date of filing: **31.03.2023**

(51) International Patent Classification (IPC):
**H04W 28/06** (2009.01)

(52) Cooperative Patent Classification (CPC):
**H04W 28/06**

(86) International application number:
**PCT/CN2023/085712**

(87) International publication number:
**WO 2024/197903 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **MA, Mengyao**
  **Shenzhen, Guangdong 518129 (CN)**
• **LIANG, Changyuan**
  **Shenzhen, Guangdong 518129 (CN)**
• **XIE, Junwen**
  **Shenzhen, Guangdong 518129 (CN)**

(74) Representative: **Isarpatent**
**Patent- und Rechtsanwälte Partg mbB**
**Friedrichstraße 31**
**80801 München (DE)**

(54) **DATA TRANSMISSION METHOD AND APPARATUS**

(57) A data transmission method and apparatus are provided. The data transmission method includes: obtaining Q first categories, where the Q first categories are data categories used by a second apparatus to execute a first task; obtaining S pieces of first sensing data, where the S pieces of first sensing data include C categories of data, and the C categories include at least one category different from the Q first categories; determining M pieces of first data from the S pieces of first sensing data based on the Q first categories, where categories corresponding to the M pieces of first data belong to the Q first categories, Q, S, M, and C are all positive integers, and M is less than S; and sending second data to the second apparatus, where the second data corresponds to the M pieces of first data.

FIG. 2

EP 4 694 310 A1

**Description**

**TECHNICAL FIELD**

This application relates to the communication field, and more specifically, to a data transmission method and apparatus.

**BACKGROUND**

As wireless communication applications continue to diversify, a next-generation wireless communication process will cater to a broader range of novel scenarios including sensing, imaging, environmental reconstruction, and the like. For example, in environmental reconstruction, a plurality of devices (sensors) may sense/observe a same environment from different viewing perspectives. Therefore, sensing results of the plurality of devices may be sent to a base station (a central server), and fused into a complete/large environmental map, or other sensing tasks are executed based on a fused result, to reduce power consumption and transmission overheads of each device. In addition, since each of the devices captures a different viewing angles, synthesizing the sensing results from a plurality of the devices can address issues such as occlusion/blind spots caused by obstacles, achieving finer reconstructions or enhanced task performance.

During the multi-device data integration phase, transmitting all sensing data from devices to the sensing center could lead to a substantial amount of data, potentially causing network congestion.

**SUMMARY**

This application provides a data transmission method and apparatus, to reduce an amount of fused data to be transmitted by extracting based on categories and sending data.

According to a first aspect, a data transmission method is provided. The method is applicable to a first apparatus and includes: obtaining Q first categories, where the Q first categories are data categories used by a second apparatus to execute a first task; obtaining S pieces of first sensing data, where the S pieces of first sensing data include C categories of data, and the C categories include at least one category different from the Q first categories; determining M pieces of first data from the S pieces of first sensing data based on the Q first categories, where categories corresponding to the M pieces of first data belong to the Q first categories, Q, S, M, and C are all positive integers, and M is less than S; and sending second data to the second apparatus, where the second data corresponds to the M pieces of first data.

According to the solution in this application, data is extracted in a category-based manner and sent, so that a data amount of fused data to be transmitted can be reduced.

Optionally, the M pieces of first data correspond to D categories, and D is less than C.

It should be understood that a "category" of data in this application may be semantics, a label, a classification category, or the like.

In a possible implementation, the Q first categories are obtained, where the Q first categories are the data categories used by the second apparatus to execute the first task; the S pieces of first sensing data are obtained, where the S pieces of first sensing data include the C categories of data; the M pieces of first data are determined from the S pieces of first sensing data based on the Q first categories, where the categories corresponding to the M pieces of first data belong to the Q first categories, and Q, S, M, and C are all positive integers; and the second data is sent to the second apparatus, where the second data corresponds to the M pieces of first data.

With reference to the first aspect, in some implementations of the first aspect, the second data is the same as the M pieces of first data, or the second data is obtained by compressing the M pieces of first data.

With reference to the first aspect, in some implementations of the first aspect, P second categories are obtained; and N first registration points are determined from the S pieces of first sensing data based on the P second categories, where the S pieces of first sensing data include B categories of registration points, categories corresponding to the N first registration points belong to the P second categories, and P, N, and B are all positive integers.

In combination with a method for a category-based registration point, a problem of a mismatch between viewing angles of different devices can be resolved when a small quantity of transmission resources are used.

Optionally, the Q first categories are determined by the first apparatus and/or the second apparatus or are predefined.

Optionally, the P second categories are determined by the first apparatus and/or the second apparatus or are predefined.

It should be understood that values of Q and P may also be determined by the first apparatus and/or the second apparatus, and the values/value of Q and/or P are/is indicated by using signaling. An amount of data to be transmitted may be controlled to some extent by controlling the values of Q and P.

It should be understood that the first category and the second category may be notified by the second apparatus to one or more first apparatuses in a unicast/multicast/broadcast manner by using related indication signaling, or may be reported by the first apparatus to the second apparatus by using a terminal device capability. The first category and the second category may be different categories determined based on an application scenario or a task that needs to be executed by the second apparatus.

With reference to the first aspect, in some implementations of the first aspect, the N first registration points are sent.

Optionally, values of M and N may be determined by the first apparatus and/or the second apparatus, and the values/value of M and/or N are/is indicated by using signaling.

Optionally, the second data is sent based on a first periodicity, and the N first registration points are sent based on a second periodicity.

It should be understood that the first periodicity and the second periodicity may be determined by the first apparatus and/or the second apparatus, and the first periodicity and/or the second periodicity are/is indicated by using signaling.

According to this embodiment of this application, data and a registration point are sent based on different periodicities, to further reduce an amount of data to be transmitted, and reduce a waste of transmission resources.

With reference to the first aspect, in some implementations of the first aspect, R second registration points are obtained, where the R second registration points are determined by the second apparatus, the R second registration points are determined from second sensing data based on T third categories, the second sensing data is obtained by the second apparatus, the second sensing data includes A categories of registration points, categories corresponding to the R second registration points belong to the T third categories, and R is a positive integer; and a first transformation mode is sent, where the first transformation mode is determined based on the N first registration points and the R second registration points.

Optionally, the second data is sent based on a first periodicity, and the first transformation mode is sent based on a second periodicity.

It should be understood that determining the first transformation mode by the first apparatus can reduce data calculation load of the second apparatus, alleviate load of a sensing center, and enhance processing efficiency.

According to this embodiment of this application, data and a transformation mode are sent based on different periodicities, to further reduce an amount of data to be transmitted, and reduce a waste of transmission resources.

With reference to the first aspect, in some implementations of the first aspect, R second registration points are obtained, where the R second registration points are determined by the second apparatus, the R second registration points are determined from second sensing data based on T third categories, the second sensing data is obtained by the second apparatus, the second sensing data includes A categories of registration points, categories corresponding to the R second registration points belong to the T third categories, and R is a positive integer; and the second data is sent, where the second data is determined based on the R second registration points, the N first registration points, and the M pieces of first data.

It should be understood that determining the second data by the first apparatus can reduce data calculation load of the second apparatus, alleviate load of a sensing center, and enhance processing efficiency.

According to this embodiment of this application, according to the category-based data transmission method, an amount of data to be transmitted can be reduced, and a waste of transmission resources can be reduced. In addition, in combination with a registration method for a category-based registration point, a problem of a mismatch between viewing angles of different devices can be resolved when a small quantity of transmission resources are used.

According to a second aspect, a data transmission method is provided. The method is applicable to a second apparatus and includes: receiving second data, where the second data corresponds to M pieces of first data, the M pieces of first data are determined by a first apparatus from S pieces of first sensing data based on Q first categories, the Q first categories are data categories used by the second apparatus to execute a first task, the S pieces of first sensing data are obtained by the first apparatus and include C categories of data, the C categories include at least one category different from the Q first categories, categories corresponding to the M pieces of first data belong to the Q first categories, Q, S, M, and C are all positive integers, and M is less than S.

According to the solution in this application, data is extracted in a category-based manner and sent, so that a data amount of fused data to be transmitted can be reduced.

In a possible implementation, the second data is received, where the second data corresponds to the M pieces of first data, the M pieces of first data are determined by the first apparatus from the S pieces of first sensing data based on the Q first categories, the Q first categories are the data categories used by the second apparatus to execute the first task, the S pieces of first sensing data are obtained by the first apparatus and include the C categories of data, categories corresponding to the M pieces of first data belong to the Q first categories, and Q, S, M, and C are all positive integers.

Optionally, the second data and second sensing data are fused.

Optionally, the M pieces of first data correspond to D categories, and D is less than C.

It should be understood that a "category" of data in this application may be semantics, a label, a classification category, or the like.

With reference to the second aspect, in some implementations of the second aspect, the second sensing data is obtained; T third categories are obtained; and R second registration points are determined from the second sensing data based on the T third categories, where the second sensing data includes A categories of registration points, categories corresponding to the R second registration points belong to the T third categories, and T, R, and A are positive integers.

Optionally, values of M and T may be determined by the first apparatus and/or the second apparatus, and the values/value of M and/or T are/is indicated by using signaling.

Optionally, the R second registration points are sent.

Optionally, the Q first categories are determined by the first apparatus and/or the second apparatus or are predefined.

Optionally, the T third categories are determined by the first apparatus and/or the second apparatus or are predefined.

It should be understood that the first category and the third category may be notified by the second apparatus to one or more first apparatuses in a unicast/multicast/broadcast manner by using related indication signaling, or may be reported by the first apparatus to the second apparatus by using a terminal device capability. The first category and the third category may be different categories determined based on an application scenario or a task that needs to be executed by the second apparatus.

With reference to the second aspect, in some implementations of the second aspect, N first registration points are obtained, where the N first registration points are determined by the first apparatus, and N is a positive integer; a second transformation mode is determined based on the R second registration points and the N first registration points; third data is determined based on the second transformation mode and the second data; and the third data and the second sensing data are fused.

It should be understood that the N first registration points are determined from the S pieces of first sensing data based on P second categories, where the S pieces of first sensing data include B categories of registration points, categories corresponding to the N first registration points belong to the P second categories, and B is a positive integer.

Optionally, the second data is received based on a first periodicity, and the N first registration points are obtained based on a second periodicity.

It should be understood that the first periodicity and the second periodicity may be determined by the first apparatus and/or the second apparatus, and the first periodicity and/or the second periodicity are/is indicated by using signaling.

According to this embodiment of this application, data and a registration point are sent based on different periodicities, to further reduce an amount of data to be transmitted, and reduce a waste of transmission resources.

With reference to the second aspect, in some implementations of the second aspect, a first transformation mode is obtained, where the first transformation mode is determined based on the R second registration points and N first registration points; third data is determined based on the first transformation mode and the second data; and the third data and the second sensing data are fused.

Optionally, the second data is received based on a first periodicity, and the first transformation mode is obtained based on a second periodicity.

It should be understood that determining the first transformation mode by the first apparatus can reduce data calculation load of the second apparatus, alleviate load of a sensing center, and enhance processing efficiency.

According to this embodiment of this application, data and a transformation mode are sent based on different periodicities, to further reduce an amount of data to be transmitted, and reduce a waste of transmission resources.

With reference to the second aspect, in some implementations of the second aspect, the second data and the second sensing data are fused, where the second data is determined by the first apparatus based on the R second registration points, N first registration points, and the M pieces of first data.

It should be understood that determining the second data by the first apparatus can reduce data calculation load of the second apparatus, alleviate load of a sensing center, and enhance processing efficiency.

According to this embodiment of this application, according to the category-based data transmission method, an amount of data to be transmitted can be reduced, and a waste of transmission resources can be reduced. In addition, in combination with a registration method for a category-based registration point, a problem of a mismatch between viewing angles of different devices can be resolved when a small quantity of transmission resources are used.

According to a third aspect, a data transmission apparatus is provided. The data transmission apparatus includes: a receiving unit, configured to obtain S pieces of first sensing data, where the S pieces of first sensing data include C categories of data, and the C categories include at least one category different from Q first categories; a processing unit, where the processing unit or the receiving unit is configured to obtain the Q first categories, and the Q first categories are data categories used by a second apparatus to execute a first task; and the processing unit is further configured to determine M pieces of first data from the S pieces of first sensing data based on the Q first categories, where categories corresponding to the M pieces of first data belong to the Q first categories, Q, S, M, and C are all positive integers, and M is less than S; and a sending unit, configured to send second data, where the second data corresponds to the M pieces of first data.

According to the solution in this application, data is extracted in a category-based manner and sent, so that a data amount of fused data to be transmitted can be reduced.

In a possible implementation, the apparatus includes: the receiving unit, configured to obtain the S pieces of first sensing data, where the S pieces of first sensing data include the C categories of data; the processing unit, where the processing unit or the receiving unit is configured to obtain the Q first categories, where the Q first categories are the data categories used by the second apparatus to execute the first task; and the processing unit is further configured to determine the M pieces of first data from the S pieces of first sensing data based on the Q first categories, where the categories corresponding to the M pieces of first data belong to the Q first categories, and Q, S, M, and C are all positive integers; and the sending unit, configured to send the second data, where the second data corresponds to the M pieces of first data.

Optionally, the M pieces of first data correspond to D categories, and D is less than C.

Optionally, the second data is the same as the M pieces of first data, or the second data is obtained by compressing the M pieces of first data.

Optionally, the processing unit or the receiving unit is further configured to obtain P second categories. The processing unit is further configured to determine N first registration points from the S pieces of first sensing data based on the P second categories, where the S pieces of first sensing data include B categories of registration points, categories corresponding to the N first registration points belong to the P second categories, and P, N, and B are all positive integers.

Optionally, the Q first categories are determined by a first apparatus and/or the second apparatus or are predefined.

Optionally, the P second categories are determined by the first apparatus and/or the second apparatus or are predefined.

Optionally, the sending unit is configured to send the N first registration points. Alternatively, the receiving unit is further configured to obtain R second registration points, where the R second registration points are determined by the second apparatus, and R is a positive integer; and the sending unit is configured to send a first transformation mode, where the first transformation mode is determined based on the N first registration points and the R second registration points. Alternatively, the receiving unit is further configured to obtain R second registration points, where the R second registration points are determined by the second apparatus, and R is a positive integer; and the processing unit is further configured to determine the second data based on the R second registration points, the N first registration points, and the M pieces of first data.

Further, optionally, the sending unit sends the second data based on a first periodicity, and sends the N first registration points based on a second periodicity; or sends the second data based on a first periodicity, and sends the first transformation mode based on a second periodicity.

The apparatus is disposed in or is the first apparatus.

The units in the apparatus are respectively configured to perform steps of the communication method in the first aspect and the implementations of the first aspect.

In a design, the apparatus is a communication chip, and the communication chip may include an input circuit or interface configured to send information or data and an output circuit or interface configured to receive information or data.

In another design, the apparatus is a communication device, and the communication device may include a transmitter machine configured to send information or data and a receiver machine configured to receive information or data.

According to a fourth aspect, a data transmission apparatus is provided. The data transmission apparatus includes: a receiving unit, configured to receive second data, where the second data corresponds to M pieces of first data, the M pieces of first data are determined by a first apparatus from S pieces of first sensing data based on Q first categories, the Q first categories are data categories used by a second apparatus to execute a first task, the S pieces of first sensing data are obtained by the first apparatus and include C categories of data, the C categories include at least one category different from the Q first categories, categories corresponding to the M pieces of first data belong to the Q first categories, Q, S, M, and C are all positive integers, and M is less than S.

According to the solution in this application, data is extracted in a category-based manner and sent, so that a data amount of fused data to be transmitted can be reduced.

In a possible implementation, the receiving unit is configured to receive the second data, where the second data corresponds to the M pieces of first data, the M pieces of first data are determined by the first apparatus from the S pieces of first sensing data based on the Q first categories, the Q first categories are the data categories used by the second apparatus to execute the first task, the S pieces of first sensing data are obtained by the first apparatus and include the C categories of data, the categories corresponding to the M pieces of first data belong to the Q first categories, and Q, S, M, and C are all positive integers.

Optionally, the processing unit is configured to fuse the second data and the second sensing data.

Optionally, the S pieces of first sensing data include the C categories of data, the M pieces of first data correspond to D categories, and D is less than C.

Optionally, the receiving unit is configured to obtain second sensing data. The receiving unit or the processing unit is configured to obtain T third categories. The processing unit is further configured to determine R second registration points from the second sensing data based on the T third categories, where the second sensing data includes A categories of registration points, categories corresponding to the R second registration points belong to the T third categories, and P, R, and A are positive integers.

Optionally, the sending unit sends the R second registration points.

Optionally, the Q first categories are determined by the first apparatus and/or the second apparatus or are predefined.

Optionally, the T third categories are determined by the first apparatus and/or the second apparatus or are predefined.

Optionally, the receiving unit or processing unit is configured to obtain N first registration points, where the N first registration points are determined by the first apparatus, and N is a positive integer; and the processing unit is further configured to: determine a second transformation mode based on the R second registration points and the N first registration points; determine third data based on the second transformation mode and the second data; and fuse the third data and the second sensing data. Alternatively, the receiving unit or the processing unit is configured to obtain a first transformation mode, where the first transformation mode is determined based on the R second registration points and N first registration points; and the processing unit is further configured to: determine third data based on the first transformation mode and the second data; and fuse the third data and the second sensing data. Alternatively, the processing unit is further configured to fuse the second data and the second sensing data, where the second data is determined by the first apparatus based on the R second registration points, N first registration points, and the M pieces of first data.

Further, optionally, the receiving unit receives the second data based on a first periodicity, and obtains the N first registration points based on a second periodicity; or receives the second data based on a first periodicity, and obtains the first transformation mode based on a second periodicity.

The apparatus is disposed in or is the second apparatus.

The units in the apparatus are respectively configured to perform steps of the communication method in the second aspect and the implementations of the second aspect.

In a design, the apparatus is a communication chip, and the communication chip may include an input circuit or interface configured to send information or data and an output circuit or interface configured to receive information or data.

In another design, the apparatus is a communication device, and the communication device may include a transmitter machine configured to send information or data and a receiver machine configured to receive information or data.

According to a fifth aspect, a data transmission apparatus is provided. The apparatus may be a sensing device, or may be a component (for example, a processor, a chip, or a chip system) of the sensing device, or may be a logical node, a logical module, or software that can implement all or some functions of the sensing device. The apparatus has a function of implementing the first aspect and the possible implementations of the first aspect. The function may be implemented by hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit. The processing unit may execute the program or the instructions stored in the storage unit or instructions from another source, to enable the apparatus to perform the communication method according to the first aspect and the possible implementations of the first aspect. In this design, the apparatus may be a terminal device.

In another possible design, when the apparatus is a chip, the chip includes an interface unit and a processing unit. The interface unit may be, for example, an input/output interface, a pin, or a circuit on the chip. The processing unit may be, for example, a processor. The processing unit may execute instructions, to enable the chip in the sensing device to perform the communication method according to any one of the first aspect and the possible implementations of the first aspect. Optionally, the processing unit may execute the instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits for controlling program execution of the communication method according to the first aspect.

According to a sixth aspect, a data transmission apparatus is provided. The apparatus may be a sensing center, or may be a component (for example, a processor, a chip, or a chip system) of the sensing center, or may be a logical node, a logical module, or software that can implement all or some functions of the sensing center. The apparatus has a function of implementing the second aspect and the possible implementations of the second aspect. The function may be implemented by hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit. The processing unit may execute the program or the instructions stored in the storage unit or instructions from another source, to enable the apparatus to perform the communication method according to the second aspect and the possible implementations of the second aspect. In this design, the apparatus may be a network device.

In another possible design, when the apparatus is a chip, the chip includes an interface unit and a processing unit. The interface unit may be, for example, an input/output interface, a pin, or a circuit on the chip. The processing unit may be, for example, a processor. The processing unit may execute instructions, to enable the chip in the sensing center to perform the communication method according to any one of the second aspect and the possible implementations of the second aspect. Optionally, the processing unit may execute the instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits for controlling program execution of the communication method according to the second aspect.

According to a seventh aspect, a communication system is provided. The communication system includes the communication device according to the third aspect or the fifth aspect and the communication apparatus according to the fourth aspect or the sixth aspect. The communication system may complete the data transmission method according to any one of the first aspect, the second aspect, or the possible implementations of the first aspect and the second aspect.

According to an eighth aspect, a computer-readable storage medium is provided. The computer-readable storage medium stores a computer program. When the computer program is run on a computer, the computer is enabled to execute instructions of the method according to any one of the first aspect, the second aspect, or the possible implementations of the first aspect and the second aspect.

According to a ninth aspect, a chip is provided. The chip includes a processing unit. The processing unit may execute instructions to perform the method according to any one of the first aspect, the second aspect, or the possible implementations of the first aspect and the second aspect.

According to a tenth aspect, a computer program product is provided. The product includes computer program code. When the computer program code is run, instructions of the method according to any one of the first aspect, the second aspect, or the possible implementations of the first aspect and the second aspect are executed.

According to an eleventh aspect, a chip system is provided. The chip system includes a memory and a processor. The memory is configured to store instructions. The processor is configured to invoke the instructions from the memory and run the instructions to perform the method according to the first aspect or the second aspect and the possible implementations of the first aspect or the second aspect.

The chip system may include an input circuit or interface configured to send information or data and an output circuit or interface configured to receive information or data.

Specifically, for beneficial effects of other aspects, refer to the beneficial effects described in the first aspect and the second aspect.

**BRIEF DESCRIPTION OF DRAWINGS**

FIG. 1 is a diagram of a possible application scenario to which an embodiment of this application is applicable;
FIG. 2 is a schematic flowchart of a data fusion method according to an embodiment of this application;
FIG. 3 is a schematic flowchart of another data fusion method according to an embodiment of this application;

FIG. 4 is a schematic flowchart of another data fusion method according to an embodiment of this application;

FIG. 5 is a schematic flowchart of another data fusion method according to an embodiment of this application;

FIG. 6 is a block diagram of an example of a data transmission apparatus according to an embodiment of this application;

FIG. 7 is a block diagram of another example of a data transmission apparatus according to an embodiment of this application; and

FIG. 8 is a block diagram of another example of a data transmission apparatus according to an embodiment of this application.

## DESCRIPTION OF EMBODIMENTS

The following describes technical solutions of this application with reference to the accompanying drawings.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or an evolved communication system such as a new radio (new radio, NR) system, a vehicle-to-everything (vehicle-to-X, V2X) system, where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like, a long term evolution-vehicle (long term evolution-vehicle, LTE-V) system, an internet of vehicles system, a machine type communication (machine type communication, MTC) system, an internet of things (internet of things, IoT) system, a long term evolution-machine (long term evolution-machine, LTE-M) system, a machine-to-machine (machine-to-machine, M2M) system, and a device-to-device (device-to-device, D2D) system.

The communication system includes a radio access network (radio access network, RAN). The RAN may be a cellular system related to the 3rd generation partnership project (3rd generation partnership project, 3GPP), for example, a 4G or 5G mobile communication system or a future-oriented evolved system (for example, a 6G mobile communication system). The RAN may alternatively be an open radio access network (open RAN, O-RAN or ORAN), a cloud radio access network (cloud radio access network, CRAN), or a wireless fidelity (wireless fidelity, Wi-Fi) system. The RAN may alternatively be a communication system that integrates the foregoing two or more systems.

A RAN node may also be sometimes referred to as an access network device, a network device, a RAN entity, an access node, or the like, and forms a part of a communication system, to help a terminal implement radio access. A plurality of RAN nodes in the communication system may be nodes of a same type, or may be nodes of different types. In some scenarios, roles of the RAN node and the terminal are relative to each other.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station, a micro base station or an indoor base station, a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or some functions of the RAN node in this application may alternatively be implemented by using a software function running on hardware, or may be implemented by using an instantiated virtualization function on a platform (for example, a cloud platform). The RAN node in this application may alternatively be a logical node, a logical module, or software that can implement all or some functions of the RAN node.

In another possible scenario, a plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

A terminal device in embodiments of this application may be a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in an evolved public land mobile network (public land mobile network, PLMN), or the like. This is not limited in embodiments of this application. For example, the terminal device may be a vehicle-mounted device, an entire vehicle device, a vehicle-mounted module, a vehicle, an on board unit (on board unit, OBU), a roadside unit (roadside unit, RSU), a vehicle-mounted communication unit (telematics box, T-box), a chip, or a system on chip (system on chip, SoC). The chip or the SoC may be installed in a vehicle, an OBU, an RSU, or a T-box.

The terminal device in embodiments of this application further includes at least any one of a user equipment, an augmented reality (augmented reality, AR) device/a virtual reality (virtual reality, VR) device/an extended reality (extended reality, XR) device, a wearable device, a smart home appliance terminal, a terminal device and a communication module of the terminal device, a mobile phone and a communication module of the mobile phone, a vehicle and a communication module of the vehicle, an information processing device, a display device, a network apparatus, a base station, a TRP, a customer premise equipment (customer premise equipment, CPE), a router, a network access device, and the like. In terms of Uu (UTRAN-to-terminal device) air interface transmission, both parties of wireless communication include a network apparatus and a user communication device. In terms of sidelink (sidelink, SL) air interface transmission, a receive end and a transmit end of wireless communication are both user communication devices. The network apparatus may be a conventional macro base station eNB in a conventional UMTS/a conventional LTE wireless communication system, may be a micro base station eNB in a heterogeneous network (heterogeneous network, HetNet) scenario, may be a baseband processing unit and a remote radio unit in a distributed base station scenario, may be a baseband unit BBU pool and a remote radio unit RRU in a CRAN scenario, and may be a gNB in a wireless communication system.

In embodiments of this application, a network device may be any device having a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, or may be a gNB or a transmission point (TRP or TP) in a 5G system, for example, an NR system, or one antenna panel or one group of antenna panels (including a plurality of antenna panels) of a base station in a 5G system, or may be a network node that forms a gNB or a transmission point, for example, a baseband unit or a distributed unit.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may alternatively be considered as being sent by the DU or sent by the DU and the AAU. It may be understood that the network device may be a device including one or more of a CU node, a DU node, and an AAU node. In addition, the CU may be classified as a network device in a radio access network (radio access network, RAN), or the CU may be classified as a network device in a core network (core network, CN). This is not limited in this application.

The network device provides a service for a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

In embodiments of this application, the terminal device or the network device includes a hardware layer, an operating system layer running over the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more of computer operating systems that implement service processing through a process (process), for example, a Linux operating system, a Unix operating system, an Android operating system, an iOS operating system, or a Windows operating system. The application layer includes applications such as a browser, a contact book, word processing software, and instant messaging software. In addition, a specific structure of an execution entity of a method provided in this application is not limited in this application, provided that a program that records code of the method provided in this application can be run to perform communication according to the method provided in embodiments of this application. For example, the method provided in embodiments of this application may be performed by a terminal device or a network device, or may be performed by a functional module that is in the terminal device or the network device and that can invoke and execute a program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable storage medium may include but is not limited to: a magnetic storage device (for example, a hard disk, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

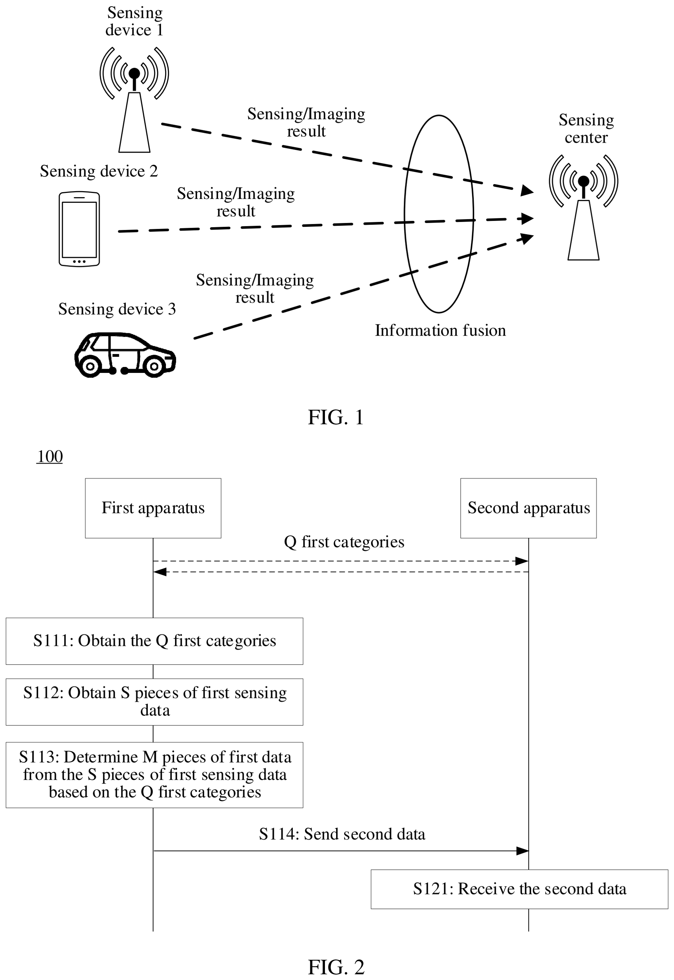

FIG. 1 is a diagram of a possible application scenario to which an embodiment of this application is applicable.

As shown in FIG. 1, a sensing device is a device having a sensing capability, and may be a terminal device having a sensing capability, for example, a mobile phone or a vehicle, or may be a network device having a sensing capability, for example, a base station. The sensing capability may be implemented by using several sensors that sense information about an environment around the sensing device. For example, the sensing capability may be implemented by using a global positioning system (global positioning system, GPS), or may be implemented by using one or more of a BeiDou system or another positioning system, an inertia measurement unit (inertial measurement unit, IMU), a lidar, a millimeter wave radar, an ultrasonic radar, or a camera apparatus. It may be understood that the sensing device is an apparatus for sending a sensing/imaging result.

As shown in FIG. 1, many devices having a sensing/imaging capability send sensing results to a sensing center for fusion, to help the sensing center obtain more complete or more accurate sensing results (for example, sensing results of positioning/tracking/recognition tasks, imaging, 3D mapping/reconstruction/environmental reconstruction, and the like). The sensing center may be a terminal device having a receiving capability, for example, a mobile phone or a vehicle, or may be a network device having a receiving capability, for example, a base station. It may be understood that the sensing center is an apparatus for receiving a sensing/imaging result.

It should be understood that FIG. 1 is merely a diagram, and other devices not shown may be further included. In addition, a quantity of sensing devices and a quantity of sensing centers included in a communication system are not limited in embodiments of this application.

In this application, "sending information to ... (a center)" may be understood as that a destination end of the information is the center, and may include directly or indirectly sending the information to the center. "Receiving information from ... (a device)" may be understood as that a source end of the information is the device, and may include directly or indirectly receiving the information from the device. Necessary processing, for example, a format change, may be performed on the information between the source end and the destination end for information sending. However, the destination end can understand valid information from the source end. A similar expression in this application may be understood similarly, and details are not repeated herein.

It should be understood that, if the sensing device sends all sensed data to the base station, a large amount of data to be transmitted is caused, resulting in network congestion. In addition, because not all sensed data helps a sensing task of the base station, transmission of all data causes a waste of transmission resources.

For the foregoing problems, this application provides a category-based data transmission method.

FIG. 2 is a schematic flowchart of a data transmission method 100 according to an embodiment of this application.

As shown in FIG. 2, a first apparatus may be a sensing device, and the second apparatus may be a sensing center.

S111: The first apparatus obtains Q first categories.

It should be understood that the first apparatus and/or the second apparatus may determine, based on a requirement, that a data selection category is the first category. The first category may be reported by the first apparatus to the second apparatus, or may be indicated by the second apparatus to the first apparatus.

The Q first categories are data categories used by the second apparatus to execute a first task.

Optionally, the Q first categories may be determined by the first apparatus and/or the second apparatus or are predefined.

It should be understood that, when the first category is determined by the second apparatus, the second apparatus may notify one or more first apparatuses of the first category in a unicast/multicast/broadcast manner by using related indication signaling. When the first category is determined by the first apparatus, the first apparatus may report the first category to the second apparatus by using a UE capability, by sending information, or in another manner. It may be determined, based on a scenario in which the first apparatus is located or a task that needs to be executed by the second apparatus, that the data selection category includes different categories. When the first category is predefined, the first apparatus and the second apparatus may invoke the first category stored in the apparatus.

It should be understood that the Q first categories obtained by the first apparatus may be received, or may be Q invoked first categories that are historically used or Q predefined first categories.

S112: The first apparatus obtains S pieces of first sensing data.

The first sensing data may be obtained by the first apparatus through sensing. The first sensing data may be sensed and reported in real time, or may be historically sensed and stored in the sensing device. This is not limited in embodiments of this application.

S113: The first apparatus determines M pieces of first data from the S pieces of first sensing data based on the Q first categories.

S114: The first apparatus sends second data. Correspondingly, in S121, the second apparatus receives the second data.

In a possible implementation, the S pieces of first sensing data include C categories of data, and the C categories include at least one category different from the Q first categories. Data of a corresponding category may be selected from the first sensing data based on the Q first categories. All data of a same category may be extracted as the first data, or a part of the data may be extracted as the first data. In other words, categories corresponding to the M pieces of first data belong to the Q first categories. Q, S, M, and C are all positive integers. However, a total amount of the M pieces of first data is less than an amount of the S pieces of first sensing data, that is, M is less than S.

In another possible implementation, the S pieces of first sensing data include C categories of data. In this case, the C categories may not be limited, in other words, the C categories may be any categories.

The second data corresponds to the M pieces of first data.

Optionally, the second data may be the same as the M pieces of first data. When the first apparatus does not process the M pieces of first data, S114 may alternatively be that the first apparatus sends the M pieces of first data. Correspondingly, in S121, the second apparatus receives the M pieces of first data.

Optionally, the second data may be obtained by compressing the M pieces of first data. A compression manner is not limited in embodiments of this application.

Optionally, a value of M may be determined by the first apparatus and/or the second apparatus, and the value of M is indicated by using signaling.

It should be understood that a "category" of data in embodiments of this application may be semantics, a label, a classification category, or the like.

Optionally, semantic segmentation may be performed on the sensed first sensing data, for example, detected original point cloud data, to obtain a data category. A semantic segmentation method is not limited in embodiments of this application. For example, semantic segmentation (semantic segmentation) may be performed by using an existing AI model, or semantic segmentation may be performed on a point cloud by using a non-AI method (for example, clustering). For example, a point cloud category may be a telegraph pole, a traffic light, a traffic sign, a stop line mark, or a lane line mark. A method for obtaining the category may be determined based on a specific data fusion task.

Optionally, the first apparatus may perform entity segmentation on the sensed first sensing data, for example, detected original point cloud data. Entity segmentation may be performed after semantic segmentation, or may be performed separately. This is not limited in this application. Entity segmentation may be for distinguishing between different entities in same semantic data. For example, only data of all vehicles in data is extracted during semantic segmentation, and entity segmentation may be for distinguishing between a vehicle 1, a vehicle 2, a vehicle 3, and the like. In this case, different entities on which entity segmentation is performed may be considered as data categories.

Optionally, based on different scenarios, the first data may be data of different types. Each piece of data may include or indicate 2D/3D coordinate information, or may include another attribute.

For example, one piece of first data may be (x, y, z, angle, strength) or (x, y, z, category), or the first data may be a bounding box (bounding box).

In this way, according to this embodiment of this application, an amount of data to be transmitted can be reduced, and a waste of transmission resources can be reduced.

Optionally, the M pieces of first data correspond to D categories, and D is less than C. In other words, the C data categories in the first sensing data may not be all included in the Q data selection categories. In this case, the first data of the D categories is extracted from data of a part of the categories in the first sensing data.

In this way, according to this embodiment of this application, a data selection category may be determined based on a task requirement, to select data content that needs to be transmitted by a device, so as to reduce an amount of data to be transmitted, and reduce a waste of transmission resources.

Optionally, after receiving the second data, the second apparatus may fuse the second data and second sensing data.

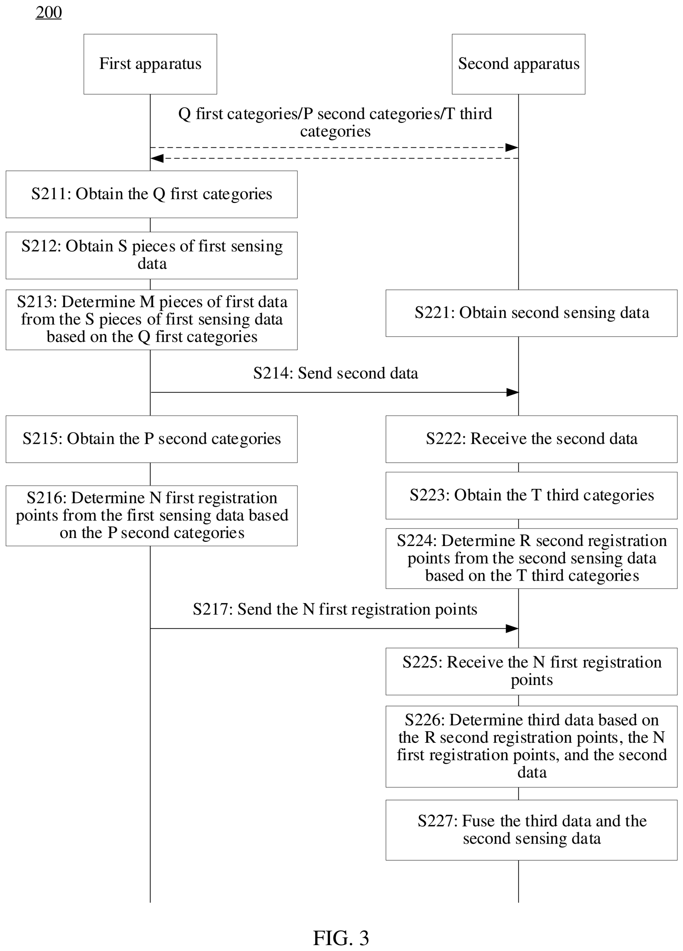

FIG. 3 is a schematic flowchart of another data transmission method 200 according to an embodiment of this application.

As shown in FIG. 3, a first apparatus may be a sensing device, and the second apparatus may be a sensing center.

S211: The first apparatus obtains Q first categories.

S212: The first apparatus obtains S pieces of first sensing data.

S213: The first apparatus determines M pieces of first data from the S pieces of first sensing data based on the Q first categories.

S214: The first apparatus sends second data. Correspondingly, in S222, the second apparatus receives the second data.

The foregoing steps are consistent with those in the method 100. Details are not repeated herein again.

S215: The first apparatus obtains P second categories.

Optionally, the P second categories may be determined by the first apparatus and/or the second apparatus or are predefined.

It should be understood that, when the second category is determined by the second apparatus, the second apparatus may notify one or more first apparatuses of the second category in a unicast/multicast/broadcast manner by using related indication signaling. When the second category is determined by the first apparatus, the first apparatus may report the second category to the second apparatus by using a UE capability, by sending information, or in another manner. It may be determined, based on a scenario in which the first apparatus is located or a task that needs to be executed by the second apparatus, that a data selection category includes different categories. When the second category is predefined, the first apparatus and the second apparatus may invoke the second category stored in the apparatus.

It should be understood that the P second categories obtained by the first apparatus may be received, or may be P invoked second categories that are historically used or P predefined second categories.

S216: The first apparatus determines N first registration points from the S pieces of first sensing data based on the P second categories.

The S pieces of first sensing data include B categories of registration points, and categories corresponding to the N first registration points belong to the P second categories. In other words, P second categories of registration points are selected from the B categories of registration points. P, N, and B are all positive integers. The N first registration points are for registration of the M pieces of first data.

Optionally, values of M and N may be determined by the first apparatus and/or the second apparatus, and the values/value of M and/or N are/is indicated by using signaling.

It should be understood that values of Q and P may also be determined by the first apparatus and/or the second apparatus, and the values/value of Q and/or P are/is indicated by using signaling. An amount of data to be transmitted may be controlled to some extent by controlling the values of Q and P.

It should be understood that the registration point is for registration of an image or point cloud data. There are a plurality of registration point extraction methods. For example, point clouds of a corresponding category are clustered to obtain a registration point. For another example, entity segmentation is performed on a point cloud, and entities of a corresponding category are separately clustered, and a clustering center/entity center of gravity is used as a registration point. This is not limited in this application. The registration point may be defined based on signal strength, a distribution range, or the like. The registration point may also be referred to as a key point, a corner point, a feature point, or the like. This is not limited in this application.

Optionally, in a registration point extraction process, a threshold of the signal strength or a threshold of the distribution range may be set to exclude a category with fewer points.

Optionally, based on different scenarios, the registration points may be data of different types. Each registration point may include or indicate 2D/3D coordinate information, or may include another attribute.

For example, the registration point may be (x, y, z, angle, strength), or (x, y, z, category).

S217: The first apparatus sends the N first registration points. Correspondingly, in S225, the second apparatus receives the N first registration points.

Optionally, the first apparatus may send the second data based on a first periodicity, and send the N first registration points based on a second periodicity. Correspondingly, the second apparatus may receive the second data based on the first periodicity, and obtain the N first registration points based on the second periodicity.

It should be understood that the first apparatus may send the second data and the first registration point based on a same periodicity, in other words, the sending steps of S214 and S217 may be combined, and the second data and the first registration point are sent simultaneously.

It should be understood that the data and the registration point may be sent based on different periodicities, and the periodicities may be determined by the first apparatus and/or the second apparatus. Because the registration point is for data registration, when a type or an angle of the data does not change greatly, a registration point or a registration mode that is previously used may be used. Therefore, a sending periodicity of the data may be different from that of the registration point.

It should be understood that, when the sending periodicity is determined by the second apparatus, the second apparatus may notify one or more first apparatuses of the sending periodicity in a unicast/multicast/broadcast manner by using related indication signaling. When the sending periodicity is determined by the first apparatus, the first apparatus may report the sending periodicity to the second apparatus by using a UE capability, by sending information, or in another manner.

According to this embodiment of this application, data and a registration point are sent based on different periodicities, to further reduce an amount of data to be transmitted, and reduce a waste of transmission resources.

S221: The second apparatus obtains second sensing data.

The second apparatus may be the sensing center. In this case, the second sensing data may be obtained by the second apparatus through sensing, or may be obtained by one or more sensing devices, that is, the first apparatus, through sensing and sent to the second apparatus, or may be sensing data historically obtained by the second apparatus and stored in the second apparatus. This is not limited in embodiments of this application.

S223: The second apparatus obtains T third categories.

Optionally, the T third categories may be determined by the first apparatus and/or the second apparatus or are predefined.

It should be understood that the T third categories are categories selected by the second apparatus for registration point extraction. The T third categories may be the same as the P second categories, in other words, the first apparatus and the second apparatus use a same registration point extract category. The T third categories may alternatively be different from the P second categories, in other words, the first apparatus and the second apparatus extract use different registration point extract categories. T may not be equal to P, and categories in the second category and the third category may be different. In this case, optionally, there may be at least one same category in the T third categories and the P second categories.

It should be understood that a value of T may alternatively be determined by the first apparatus and/or the second apparatus, and the value of T is indicated by using signaling.

It should be understood that, when the third category is determined by the second apparatus, the second apparatus may notify one or more first apparatuses of the third category in a unicast/multicast/broadcast manner by using related indication signaling. When the third category is determined by the first apparatus, the first apparatus may report the third category to the second apparatus by using a UE capability, by sending information, or in another manner. It may be determined, based on a scenario in which the first apparatus is located or a task that needs to be executed by the second apparatus, that the data selection category includes different categories. When the third category is predefined, the first apparatus and the second apparatus may invoke the third category stored in the apparatus.

It should be understood that the T third categories obtained by the second apparatus may be received, or may be T invoked third categories that are historically used or T predefined third categories.

S224: The second apparatus determines R second registration points from the second sensing data based on the T third categories.

The second sensing data includes A categories of registration points, a corresponding category of registration points may be selected from the second sensing data based on the T third categories, categories corresponding to the R second registration points belong to the T third categories, in other words, the T third categories of registration points are selected from the A categories of registration points, and T, R, and A are all positive integers.

S226: The second apparatus determines third data based on the R second registration points, the N first registration points, and the second data.

Optionally, the second data is the same as the M pieces of first data, or the second data is obtained by compressing the M pieces of first data.

It should be understood that the R second registration points and the N first registration points may be processed by using an AI model, a training algorithm, or the like, to obtain a correspondence from registration point pairs of a same category or different categories in the R second registration points and the N first registration points. The second data may be processed based on the correspondence to obtain the third data.

Optionally, the second apparatus may determine a second transformation mode based on the R second registration points and the N first registration points, and determine the third data based on the second transformation mode and the second data.

It should be understood that the second transformation mode is a transformation mode determined by the sensing center, and the second transformation mode may be obtained by using an algorithm or a method that is the same as or different from that used by the sensing device. Therefore, the second transformation mode may be the same as a first transformation mode, or may be different from the first transformation mode.

It should be understood that the first transformation mode or the second transformation mode may be a transformation matrix, and each piece of data in the second data may be transformed by using the transformation matrix to obtain the third data. There are a plurality of methods for obtaining the transformation matrix. For example, the transformation matrix may be obtained according to a random sample consensus (Random Sample Consensus, RANSAC) algorithm or may be obtained by using an AI training model. This is not limited in this application.

For example, it is assumed that the N first registration points extracted and sent by the first apparatus are $\{Y_j, j \in [1, N]\}$, and the R second registration points extracted by the second apparatus are $\{Z_k, k \in [1, R]\}$. In this case, steps of obtaining the first transformation mode or the second transformation mode, that is, the transformation matrix, are as follows: (1) Randomly select E (where for example, E=3) first registration points from $\{Y_j, j \in [1, N]\}$, to form the $S_E$, where an initial set W is an empty set.

(2) For each registration point $Y_j$ in $S_E$, randomly select a registration point $Z_k$ from the R second registration points $\{Z_k, k \in [1, R]\}$ (where if there is a registration point of a category the same as that of $Y_j$, a registration point of a category the same as that of $Y_j$ may be preferentially selected), and add $(Y_j, Z_k)$ to the set W.

(3) Calculate a corresponding transformation matrix H based on E registration point pairs $(Y_j, Z_k)$ in the set W, where $j \in [1, E]$, and $k \in [1, E]$.

(4) Transform each registration point $Y_j$ in W by using H to obtain $Y'_j$, where $Y'_j = H \times Y_j$, so as to obtain $F = \{Y'_j, j \in [1, E]\}$ and $G = \{Z_k, b \in [1, E]\}$; calculate a mean square error (mean square error, MSE) between F and G; and if the obtained MSE is less than a threshold T, use H as a final transformation matrix and end the calculation; or if the obtained MSE is not less than the threshold T, start the calculation again from step (1) until a maximum quantity of cycles is reached, and perform step (5), where the maximum quantity of cycles may be pre-agreed on.

(5) If the maximum quantity of cycles is reached, use H corresponding to a minimum MSE in a cycle in step (4) as the final transformation matrix.

It should be understood that the foregoing process is merely a possible implementation, and does not constitute a limitation on this application.

Optionally, the second data may be transformed in the second transformation mode or the first transformation mode to obtain the third data.

For example, after obtaining the first transformation mode, that is, the transformation matrix H, the second apparatus may transform each registration point $X_i$ in the received second data $\{X_i\}$ to obtain $X'_i$, and fuse the third data $\{X'_i\}$ obtained through transformation and the second sensing data.

For example, the second data is coordinate data and includes $\begin{bmatrix} P_x \\ P_y \\ P_z \end{bmatrix}$, and H is a transformation matrix, that is, the first transformation mode or the second transformation mode, where $R_{3\times3}$ may be considered as a rotation matrix between a viewing angle of the second apparatus and a viewing angle of the first apparatus, and $\begin{bmatrix} T_x \\ T_y \\ T_z \end{bmatrix}$ is a translation vector. In this case, the following may be obtained:

$$X_i = \begin{bmatrix} P_x \\ P_y \\ P_z \end{bmatrix}, X'_i = \begin{bmatrix} P'_x \\ P'_y \\ P'_z \end{bmatrix}, \qquad H = \begin{bmatrix} & & & T_x \\ & R_{3\times3} & & T_y \\ & & & T_z \\ 0 & 0 & 0 & 1 \end{bmatrix}, \qquad \text{where } R_{3\times3} = \begin{bmatrix} r_{11} & r_{12} & r_{13} \\ r_{21} & r_{22} & r_{23} \\ r_{31} & r_{32} & r_{33} \end{bmatrix},$$

$$X'_i = H \times X_i, \text{that is,} \begin{bmatrix} P'_x \\ P'_y \\ P'_z \end{bmatrix} = \begin{bmatrix} & & & T_x \\ & R_{3\times3} & & T_y \\ & & & T_z \\ 0 & 0 & 0 & 1 \end{bmatrix} \times \begin{bmatrix} P_x \\ P_y \\ P_z \end{bmatrix}$$

It should be understood that a registration point extraction algorithm, a transformation matrix calculation method, and a semantic/entity segmentation model may all be determined by the first apparatus and/or the second apparatus, and a specific registration point extraction algorithm, a specific transformation matrix calculation method, and a specific semantic/entity segmentation model are indicated by using signaling. The registration point extraction algorithm, the transformation matrix calculation method, and the semantic/entity segmentation model may alternatively be predefined.

S227: The second apparatus fuses the third data and the second sensing data.

It should be understood that fusing the third data and the second sensing data may be to converge the two pieces of data, or may be an information processing process of merging, correlating, integrating, or intelligently combining the two pieces of data. A specific fusion method is not limited in this application.

It should be understood that fused data is used by the second apparatus to execute a task. The task may be to sense an ambient environment, identify and track a moving object, or perform path planning with reference to a navigator and map data. Specific content of the task is not limited in this application.

According to this embodiment of this application, according to the category-based data transmission method, an amount of data to be transmitted can be reduced, and a waste of transmission resources can be reduced. In addition, in combination with a registration method for a category-based registration point, a problem of a mismatch between viewing angles of different devices can be resolved when a small quantity of transmission resources are used.

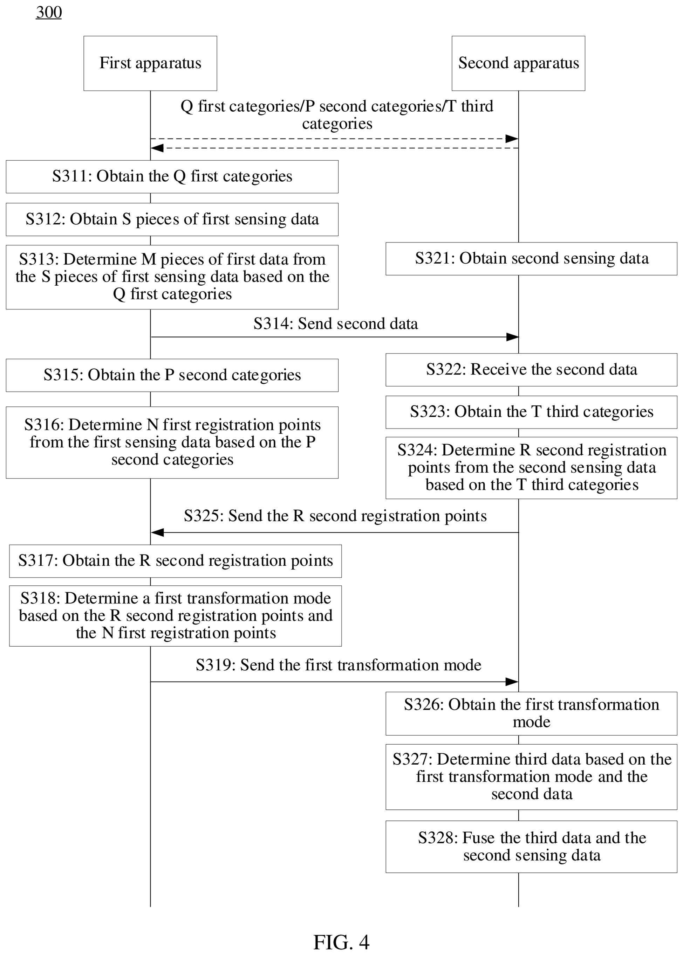

FIG. 4 is a schematic flowchart of another data fusion method 300 according to an embodiment of this application. The method shown in FIG. 4 includes at least the following steps.

S311: A first apparatus obtains Q first categories.

S312: The first apparatus obtains S pieces of first sensing data.

S313: The first apparatus determines M pieces of first data from the S pieces of first sensing data based on the Q first categories.

S314: The first apparatus sends second data. Correspondingly, in S322, a second apparatus receives the second data.

S315: The first apparatus obtains P second categories.

S316: The first apparatus determines N first registration points from the S pieces of first sensing data based on the P second categories.

S321: The second apparatus obtains second sensing data.

S323: The second apparatus obtains T third categories.

S324: The second apparatus determines R second registration points based on the T third categories and the second sensing data.

The foregoing steps are consistent with those in the method 200. Details are not repeated herein again.

S325: The second apparatus sends the R second registration points. Correspondingly, in S317, the first apparatus obtains the R second registration points.

It should be understood that the first apparatus may receive the R second registration points, or may invoke R second registration points that are historically used.

S318: The first apparatus determines a first transformation mode based on the R second registration points and the N first registration points.

It should be understood that the first transformation mode may be a transformation matrix, and each of the M pieces of first data may be transformed by using the transformation matrix to obtain the second data. There are a plurality of methods for obtaining the transformation matrix. For example, the transformation matrix may be obtained according to a random sample consensus algorithm or may be obtained by using an AI training model. This is not limited in this application.

It should be understood that the first transformation mode is a transformation mode determined by a sensing device, and the first transformation mode may be obtained by using an algorithm or a method that is the same as or different from that used by a sensing center. Therefore, the first transformation mode may be the same as a second transformation mode, or may be different from the second transformation mode.

S319: The first apparatus sends the first transformation mode. Correspondingly, in S326, the second apparatus obtains the first transformation mode.

Optionally, the first apparatus sends the second data based on a first periodicity, and sends the first transformation mode based on a second periodicity. Correspondingly, the second apparatus receives the second data based on the first periodicity, and obtains the first transformation mode based on the second periodicity.

It should be understood that the first apparatus may send the second data and the first transformation mode based on a same periodicity, in other words, the sending steps of S314 and S319 may be combined, and the second data and the first transformation mode are sent simultaneously.

It should be understood that the data and the transformation mode may be sent based on different periodicities, and the periodicities may be determined by the first apparatus and/or the second apparatus. Because the transformation mode is for data registration, when a type or an angle of the data does not change greatly, a registration mode that is previously used may be used. Therefore, a sending periodicity of the data may be different from that of the transformation mode.

According to this embodiment of this application, data and a transformation matrix are sent based on different periodicities, to further reduce an amount of data to be transmitted, and reduce a waste of transmission resources.

S327: The second apparatus determines third data based on the first transformation mode and the second data.

Optionally, the second data is the same as the M pieces of first data, or the second data may be obtained by compressing the M pieces of first data.

It should be understood that the second apparatus performs registration on the second data based on the obtained first transformation mode. The first transformation mode may be a transformation matrix, or may be another transformation manner, for example, a formula, a model, or a mapping relationship.

It should be understood that a registration point extraction algorithm, a transformation matrix calculation method, and a semantic/entity segmentation model may all be determined by the first apparatus and/or the second apparatus, and a specific registration point extraction algorithm, a specific transformation matrix calculation method, and a specific semantic/entity segmentation model are indicated by using signaling. The registration point extraction algorithm, the transformation matrix calculation method, and the semantic/entity segmentation model may alternatively be predefined.

S328: The second apparatus fuses the third data and the second sensing data.

It should be understood that fusing the third data and the second sensing data may be to converge the two pieces of data, or may be an information processing process of merging, correlating, integrating, or intelligently combining the two pieces of data. A specific fusion method is not limited in this application.

It should be understood that fused data is used by the second apparatus to execute a first task. The first task may be to sense an ambient environment, identify and track a moving object, or perform path planning with reference to a navigator and map data. Specific content of the task is not limited in this application.

It should be further understood that the second apparatus and the first apparatus may determine the second category and the first category based on content and a requirement of a to-be-executed task.

It should be understood that determining the first transformation mode by the sensing device, that is, the first apparatus can reduce data calculation load of the sensing center, that is, the second apparatus, alleviate load of the sensing center, and enhancing processing efficiency.

According to this embodiment of this application, according to the category-based data transmission method, an amount of data to be transmitted can be reduced, and a waste of transmission resources can be reduced. In addition, in combination with a registration method for a category-based registration point, a problem of a mismatch between viewing angles of different devices can be resolved when a small quantity of transmission resources are used.

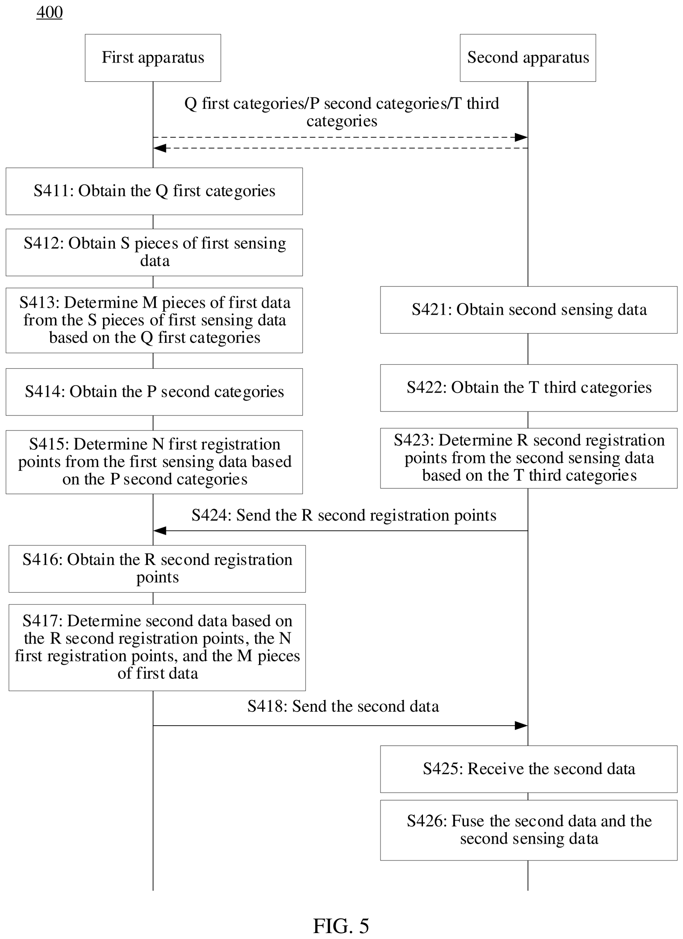

FIG. 5 is a schematic flowchart of another data fusion method 400 according to an embodiment of this application. The method shown in FIG. 5 includes at least the following steps.

S411: A first apparatus obtains Q first categories.

S412: The first apparatus obtains S pieces of first sensing data.

S413: The first apparatus determines M pieces of first data from the S pieces of first sensing data based on the Q first categories.

S414: The first apparatus obtains P second categories.

S415: The first apparatus determines N first registration points from the S pieces of first sensing data based on the P second categories.

S421: The second apparatus obtains second sensing data.

S422: The second apparatus obtains T third categories.

S423: The second apparatus determines R second registration points from the second sensing data based on the T third categories.

S424: The second apparatus sends the R second registration points. Correspondingly, in S416, the first apparatus obtains the R second registration points.

The foregoing steps are consistent with those in the method 300. Details are not repeated herein again.

S417: Determine second data based on the R second registration points, the N first registration points, and the M pieces of first data.

It should be understood that the R second registration points and the N first registration points may be processed by using an AI model, a training algorithm, or the like, to obtain a correspondence from registration point pairs of a same category or different categories in the R second registration points and the N first registration points. The M pieces of first data may be processed based on the correspondence to obtain the second data.

It should be understood that the processing may further include compression. After registration is performed on the M pieces of first data based on the R second registration points and the N first registration points, data obtained through registration may be further compressed.

Optionally, the first apparatus may determine a first transformation mode based on the R second registration points and the N first registration points, and determine the second data based on the first transformation mode and the M pieces of first data.

It should be understood that the first transformation mode may be a transformation matrix, and each of the M pieces of first data may be transformed by using the transformation matrix to obtain the second data. There are a plurality of methods for obtaining the transformation matrix. For example, the transformation matrix may be obtained according to a random sample consensus algorithm or may be obtained by using an AI training model. This is not limited in this application.

S418: The first apparatus sends the second data. Correspondingly, in S425, the second apparatus receives the second data.

S426: The second apparatus fuses the second data and the second sensing data.

It should be understood that fusing the second data and the second sensing data may be to converge the two pieces of data, or may be an information processing process of merging, correlating, integrating, or intelligently combining the two pieces of data. A specific fusion method is not limited in this application.

It should be understood that fused data is used by the second apparatus to execute a task. The task may be to sense an ambient environment, identify and track a moving object, or perform path planning with reference to a navigator and map data. Specific content of the task is not limited in this application.

It should be further understood that the second apparatus and the first apparatus may determine the second category and the first category based on content and a requirement of a to-be-executed task.

It should be understood that determining the second data by a sensing device, that is, the first apparatus, can reduce data calculation load of a sensing center, that is, the second apparatus, alleviate load of the sensing center, and enhancing processing efficiency.

It should be understood that a sequence of steps described in the method 100 to the method 400 does not constitute a limitation on an execution sequence, and a sequence may be changed between the steps provided that a corresponding effect is achieved.

It should be further understood that, based on different computing capabilities and transmission capabilities of the second apparatus and the first apparatus, corresponding calculation steps may be performed on different apparatuses. For example, the second data may be determined by the first apparatus or the second apparatus based on the R second registration points, the N first registration points, and the M pieces of first data. In this way, computing load of the sensing center or the sensing device can be reduced, and computing efficiency can be improved.

According to this embodiment of this application, according to the category-based data transmission method, an amount of data to be transmitted can be reduced, and a waste of transmission resources can be reduced. In addition, in combination with a registration method for a category-based registration point, a problem of a mismatch between viewing angles of different devices can be resolved when a small quantity of transmission resources are used.

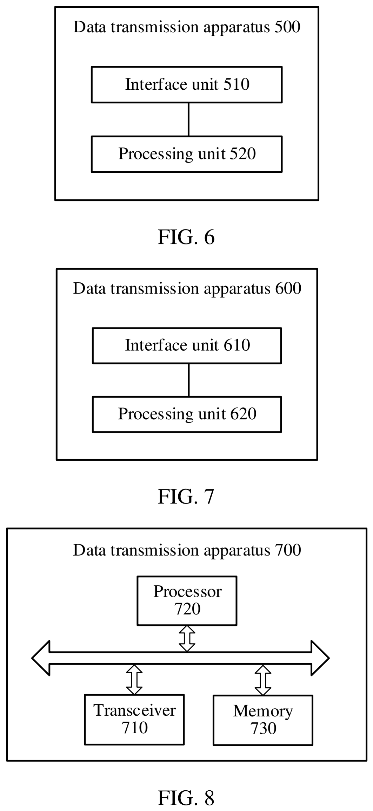

According to the foregoing methods, FIG. 6 is a diagram of a data transmission apparatus 500 according to an embodiment of this application.

As shown in FIG. 6, the data transmission apparatus 500 may include an interface unit 510 and a processing unit 520.

In a possible design, the data transmission apparatus 500 may correspond to the first apparatus (or the sensing device) in the foregoing method embodiments.

For example, the data transmission apparatus 500 may correspond to the first apparatus in the methods according to embodiments of this application. The interface unit in the apparatus 500 may include: a receiving unit, configured to obtain S pieces of first sensing data, where the S pieces of first sensing data include C categories of data, and the C categories include at least one category different from Q first categories; a processing unit, where the processing unit or the receiving unit is configured to obtain the Q first categories, and the Q first categories are data categories used by a second apparatus to execute a first task; and the processing unit is further configured to determine M pieces of first data from the S pieces of first sensing data based on the Q first categories, where categories corresponding to the M pieces of first data belong to the Q first categories, Q, S, M, and C are all positive integers, and M is less than S; and a sending unit, configured to send second data, where the second data corresponds to the M pieces of first data.

In a possible implementation, the apparatus includes: the receiving unit, configured to obtain the S pieces of first sensing data, where the S pieces of first sensing data include the C categories of data; the processing unit, where the processing unit or the receiving unit is configured to obtain the Q first categories, where the Q first categories are the data categories used by the second apparatus to execute the first task; and the processing unit is further configured to determine the M pieces of first data from the S pieces of first sensing data based on the Q first categories, where the categories corresponding to the M pieces of first data belong to the Q first categories, and Q, S, M, and C are all positive integers; and the sending unit, configured to send the second data, where the second data corresponds to the M pieces of first data.

Optionally, the M pieces of first data correspond to D categories, and D is less than C.

Optionally, the processing unit or the receiving unit is further configured to obtain P second categories. The processing unit is further configured to determine N first registration points from the S pieces of first sensing data based on the P second categories, where the S pieces of first sensing data include B categories of registration points, categories corresponding to the N first registration points belong to the P second categories, and P, N, and B are all positive integers.

Optionally, the Q first categories are determined by the first apparatus and/or the second apparatus or are predefined.

Optionally, the P second categories are determined by the first apparatus and/or the second apparatus or are predefined.

Optionally, the second data is the same as the first data.

Optionally, the sending unit is configured to send the N first registration points. Alternatively, the receiving unit is further configured to obtain R second registration points, where the R second registration points are determined by the second apparatus, and R is a positive integer; and the sending unit is configured to send a first transformation mode, where the first transformation mode is determined based on the N first registration points and the R second registration points. Alternatively, the receiving unit is further configured to obtain R second registration points, where the R second registration points are determined by the second apparatus, and R is a positive integer; and the processing unit is further configured to determine the second data based on the R second registration points, the N first registration points, and the M pieces of first data.

Further, optionally, the sending unit sends the second data based on a first periodicity, and sends the N first registration points based on a second periodicity; or sends the second data based on a first periodicity, and sends the first transformation mode based on a second periodicity.

The interface unit 510 in the data transmission apparatus 500 performs a receiving and sending operation performed by the first apparatus in the foregoing method embodiments, and the processing unit 520 performs an operation other than the receiving and sending operation.

FIG. 7 is a diagram of a data transmission apparatus 600 according to an embodiment of this application.

As shown in FIG. 7, the data transmission apparatus 600 may include an interface unit 610 and a processing unit 620.

In a possible design, the communication apparatus 600 may correspond to the second apparatus (or the sensing center) in the foregoing method embodiments.

For example, the communication apparatus 600 may correspond to the second apparatus in the methods according to embodiments of this application. The interface unit 610 in the communication apparatus 600 may include a receiving unit. The receiving unit is configured to receive second data, where the second data corresponds to M pieces of first data, the M pieces of first data are determined by a first apparatus from S pieces of first sensing data based on Q first categories, the Q first categories are data categories used by the second apparatus to execute a first task, the S pieces of first sensing data are obtained by the first apparatus and include C categories of data, the C categories include at least one category different from the Q first categories, categories corresponding to the M pieces of first data belong to the Q first categories, Q, S, M, and C are all positive integers, and M is less than S.

In a possible implementation, the receiving unit is configured to receive the second data, where the second data corresponds to the M pieces of first data, the M pieces of first data are determined by the first apparatus from the S pieces of first sensing data based on the Q first categories, the Q first categories are the data categories used by the second apparatus to execute the first task, the S pieces of first sensing data are obtained by the first apparatus and include the C categories of data, the categories corresponding to the M pieces of first data belong to the Q first categories, and Q, S, M, and C are all positive integers.

According to the solution in this application, data is extracted in a category-based manner and sent, so that a data amount of fused data to be transmitted can be reduced.

Optionally, the processing unit is configured to fuse the second data and the second sensing data.

Optionally, the S pieces of first sensing data include the C categories of data, the M pieces of first data correspond to D categories, and D is less than C.

Optionally, the receiving unit is configured to obtain second sensing data. The receiving unit or the processing unit is configured to obtain T third categories. The processing unit is further configured to determine R second registration points from the second sensing data based on the T third categories, where the second sensing data includes A categories of registration points, categories corresponding to the R second registration points belong to the T third categories, and T, R, and A are positive integers.

Optionally, the Q first categories are determined by the first apparatus and/or the second apparatus or are predefined.

Optionally, the T third categories are determined by the first apparatus and/or the second apparatus or are predefined.

Optionally, the sending unit sends the R second registration points.

Optionally, the receiving unit or processing unit is configured to obtain N first registration points, where the N first registration points are determined by the first apparatus, and N is a positive integer; and the processing unit is further configured to: determine a second transformation mode based on the R second registration points and the N first registration points; determine third data based on the second transformation mode and the second data; and fuse the third data and the second sensing data. Alternatively, the receiving unit or the processing unit is configured to obtain a first transformation mode, where the first transformation mode is determined based on the R second registration points and N first registration points; and the processing unit is further configured to: determine third data based on the first transformation mode and the second data; and fuse the third data and the second sensing data. Alternatively and optionally, the receiving unit is further configured to receive the second data, where the second data is determined by the first apparatus based on the R second registration points, N first registration points, and the M pieces of first data; and the processing unit is further configured to fuse the second data and the second sensing data.

Further, optionally, the receiving unit receives the second data based on a first periodicity, and obtains the N first registration points based on a second periodicity; or receives the second data based on a first periodicity, and obtains the first transformation mode based on a second periodicity.

The interface unit 610 in the data transmission apparatus 600 performs a receiving and sending operation performed by the second apparatus in the foregoing method embodiments, and the processing unit 620 performs an operation other than the receiving and sending operation.

According to the foregoing methods, FIG. 8 is a diagram of a data apparatus 700 according to an embodiment of this application. As shown in FIG. 8, the apparatus 700 may be a first apparatus, or may be a second apparatus.

The apparatus 700 may include a processor 710 (that is, an example of a processing unit) and a memory 720. The memory 720 is configured to store instructions. The processor 710 is configured to execute the instructions stored in the memory 720, to enable the apparatus 700 to implement steps performed by the first apparatus (or the sensing device) or the second apparatus (or the sensing center) in the method.

Further, the apparatus 700 may include an interface 730 (that is, an example of a receiving unit module or a sending unit). Further, the processor 710, the memory 720, and the interface 730 may communicate with each other through an internal connection path, to transfer a control signal and/or a data signal. The memory 720 is configured to store a computer program. The processor 710 may be configured to invoke the computer program from the memory 720 and run the computer program, to control the interface 730 to receive a signal or send a signal, so as to complete steps of the first apparatus or the second apparatus in the foregoing methods. The memory 720 may be integrated into the processor 710, or may be disposed separately from the processor 710.

Optionally, if the communication apparatus 700 is a communication device, the interface 730 is a receiver or a transmitter. The receiver and the transmitter may be a same physical entity or different physical entities. When the receiver and the transmitter are a same physical entity, the receiver and the transmitter may be collectively referred to as a transceiver.

Optionally, if the communication apparatus 700 is a chip or a circuit, the interface 730 is an input interface or the interface 730 is an output interface.

In an implementation, it may be considered that a function of the interface 730 is implemented by using a transceiver circuit or a dedicated transceiver chip. It may be considered that the processor 710 is implemented by using a dedicated processing chip, a processing circuit, a processor, or a general-purpose chip.

In another implementation, it may be considered that the communication device provided in this embodiment of this application is implemented by using a general-purpose computer. To be specific, program code for implementing functions of the processor 710 and the interface 730 is stored in the memory 720, and the general-purpose processor implements the functions of the processor 710 and the interface 730 by executing the code in the memory 720.

For concepts, explanations, detailed descriptions, and other steps of the apparatus 700 that are related to the technical solutions provided in embodiments of this application, refer to the descriptions of the content in the foregoing method or other embodiments. Details are not repeated herein again.

An embodiment of this application further provides a computer-readable storage medium. The computer-readable storage medium stores computer instructions for implementing the method performed by the first apparatus or the second apparatus in the foregoing method embodiments.

For example, when a computer program is executed by a computer, the computer is enabled to implement the method performed by the first apparatus or the second apparatus in the foregoing method embodiments.

An embodiment of this application further provides a computer program product including instructions. When the instructions are executed by a computer, the computer is enabled to implement the method performed by the first apparatus (or the sensing device) or the method performed by the second apparatus (or the sensing center) in the foregoing method embodiments.

An embodiment of this application further provides a communication system. The communication system includes the first apparatus and the second apparatus in the foregoing embodiments.

For explanations and beneficial effects of related content in any one of the apparatuses provided above, refer to corresponding method embodiments provided above. Details are not repeated herein again.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer instructions or computer programs. When the computer instruction or the computer program is loaded and executed on a computer, the procedures or functions according to embodiments of this application are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes need to be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for convenience and conciseness of description, for a detailed working process of the foregoing system, apparatus, and unit, refer to a corresponding process in the foregoing method embodiments. Details are not repeated herein again. In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electronic form, a mechanical form, or another form.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units may be integrated into one unit. When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method, wherein the method is applicable to a first apparatus, and comprises:

   obtaining Q first categories, wherein the Q first categories are data categories used by a second apparatus to execute a first task;
   obtaining S pieces of first sensing data, wherein the S pieces of first sensing data comprise C categories of data, and the C categories comprise at least one category different from the Q first categories;
   determining M pieces of first data from the S pieces of first sensing data based on the Q first categories, wherein categories corresponding to the M pieces of first data belong to the Q first categories, Q, S, M, and C are all positive integers, and M is less than S; and
   sending second data to the second apparatus, wherein the second data corresponds to the M pieces of first data.

2. The method according to claim 1, wherein the method further comprises:

   obtaining P second categories; and
   determining N first registration points from the S pieces of first sensing data based on the P second categories, wherein the S pieces of first sensing data comprise B categories of registration points, categories corresponding to the N first registration points belong to the P second categories, and P, N, and B are all positive integers.

3. The method according to claim 1 or 2, wherein the second data is the same as the M pieces of first data, or the second data is obtained by compressing the M pieces of first data.

4. The method according to claim 2, wherein the method further comprises:

   sending the N first registration points; or
   obtaining R second registration points, wherein the R second registration points are determined by the second apparatus, and R is a positive integer; and sending a first transformation mode, wherein the first transformation mode is determined based on the N first registration points and the R second registration points; or
   obtaining R second registration points, wherein the R second registration points are determined by the second apparatus, and R is a positive integer; and determining the second data based on the R second registration points, the N first registration points, and the M pieces of first data.

5. The method according to any one of claims 1 to 4, wherein the Q first categories are determined by the first apparatus and/or the second apparatus or are predefined.

6. The method according to claim 2 or 4, wherein the P second categories are determined by the first apparatus and/or the second apparatus or are predefined.

7. The method according to claim 4, wherein the method further comprises: sending the second data based on a first periodicity; and sending the N first registration points based on a second periodicity; or
   sending the second data based on a first periodicity; and sending the first transformation mode based on a second periodicity.

8. The method according to any one of claims 1 to 7, wherein the M pieces of first data correspond to D categories, D is a positive integer, and D is less than C.

9. A data transmission method, wherein the method is applicable to a second apparatus, and comprises:
   receiving second data, wherein the second data corresponds to M pieces of first data, the M pieces of first data are determined by a first apparatus from the S pieces of first sensing data based on Q first categories, the Q first categories are data categories used by the second apparatus to execute a first task, the S pieces of first sensing data are obtained by the first apparatus and comprise C categories of data, the C categories comprise at least one category different from the Q first categories, categories corresponding to the M pieces of first data belong to the Q first categories, Q, S, M, and C are all positive integers, and M is less than S.

10. The method according to claim 9, wherein the method further comprises:

obtaining second sensing data;
obtaining T third categories; and
determining R second registration points from the second sensing data based on the T third categories, wherein the second sensing data comprises A categories of registration points, categories corresponding to the R second registration points belong to the T third categories, and T, R, and A are positive integers.

11. The method according to claim 10, wherein the method further comprises:
sending the R second registration points.

12. The method according to claim 10, wherein the method further comprises:

obtaining N first registration points, wherein the N first registration points are determined by the first apparatus, and N is a positive integer; determining a second transformation mode based on the R second registration points and the N first registration points; determining third data based on the second transformation mode and the second data; and fusing the third data and the second sensing data; or
obtaining a first transformation mode, wherein the first transformation mode is determined based on the R second registration points and the N first registration points; determining third data based on the first transformation mode and the second data; and fusing the third data and the second sensing data; or
fusing the second data and the second sensing data, wherein the second data is determined by the first apparatus based on the R second registration points, the N first registration points, and the M pieces of first data.

13. The method according to any one of claims 9 to 12, wherein the Q first categories are determined by the first apparatus and/or the second apparatus or are predefined.

14. The method according to any one of claims 10 to 12, wherein the T third categories are determined by the first apparatus and/or the second apparatus or are predefined.

15. The method according to claim 12, wherein the second data is received based on a first periodicity, and the N first registration points are obtained based on a second periodicity; or
the second data is received based on a first periodicity, and the first transformation mode is obtained based on a second periodicity.

16. The method according to any one of claims 9 to 15, wherein the M pieces of first data correspond to D categories, and D is less than C.

17. A data transmission apparatus, comprising: a receiving unit, configured to obtain S pieces of first sensing data, wherein the S pieces of first sensing data comprise C categories of data, and the C categories comprise at least one category different from the Q first categories;

a processing unit, wherein the processing unit or the receiving unit is configured to obtain the Q first categories, and the Q first categories are data categories used by a second apparatus to execute a first task; and the processing unit is further configured to determine M pieces of first data from the S pieces of first sensing data based on the Q first categories, wherein categories corresponding to the M pieces of first data belong to the Q first categories, Q, S, M, and C are all positive integers, and M is less than S; and
a sending unit, configured to send second data, wherein the second data corresponds to the M pieces of first data.

18. The apparatus according to claim 17, wherein the receiving unit or the processing unit is further configured to obtain P second categories; and
the processing unit is further configured to determine N first registration points from the S pieces of first sensing data based on the P second categories, wherein the S pieces of first sensing data comprise B categories of registration points, categories corresponding to the N first registration points belong to the P second categories, and P, N, and B are all positive integers.

19. The apparatus according to claim 17, wherein the second data is the same as the M pieces of first data, or the second data is obtained by compressing the M pieces of first data.

20. The apparatus according to claim 18, wherein the sending unit is configured to send the N first registration points; or

the receiving unit or the processing unit is further configured to obtain R second registration points, wherein the R second registration points are determined by the second apparatus, and R is a positive integer; and the sending unit is configured to send a first transformation mode, wherein the first transformation mode is determined based on the N first registration points and the R second registration points; or
the receiving unit or the processing unit is further configured to obtain R second registration points, wherein the R second registration points are determined by the second apparatus, and R is a positive integer; and the processing unit is configured to determine the second data based on the R second registration points, the N first registration points, and the M pieces of first data.

21. The apparatus according to any one of claims 17 to 20, wherein the Q first categories are determined by a first apparatus and/or the second apparatus or are predefined.

22. The apparatus according to claim 18 or 20, wherein the P second categories are determined by the second apparatus and/or a first apparatus or are predefined.

23. The apparatus according to claim 20, wherein the sending unit sends the second data based on a first periodicity, and sends the N first registration points based on a second periodicity; or
sends the second data based on a first periodicity, and sends the first transformation mode based on a second periodicity.

24. The apparatus according to any one of claims 17 to 23, wherein the M pieces of first data correspond to D categories, D is a positive integer, and D is less than C.

25. A data transmission apparatus, comprising: a receiving unit, configured to receive second data, wherein the second data corresponds to M pieces of first data, the M pieces of first data are determined by a first apparatus from the S pieces of first sensing data based on Q first categories, the S pieces of first sensing data are obtained by the first apparatus and comprise C categories of data, the C categories comprise at least one category different from the Q first categories, categories corresponding to the M pieces of first data belong to the Q first categories, Q, S, M, and C are all positive integers, and M is less than S.

26. The apparatus according to claim 25, wherein the receiving unit is further configured to receive second sensing data;

the receiving unit or the processing unit is configured to obtain T third categories; and
the processing unit is further configured to determine R second registration points from the second sensing data based on the T third categories, wherein the second sensing data comprises A categories of registration points, categories corresponding to the R second registration points belong to the T third categories, and T, R, and A are positive integers.

27. The apparatus according to claim 26, wherein the apparatus further comprises: a sending unit, configured to send the R second registration points.

28. The apparatus according to claim 26, wherein the receiving unit or the processing unit is configured to obtain N first registration points, wherein the N first registration points are determined by the first apparatus, and N is a positive integer; and the processing unit is further configured to: determine a second transformation mode based on the R second registration points and the N first registration points; determine third data based on the second transformation mode and the second data; and fuse the third data and the second sensing data; or

the receiving unit or the processing unit is configured to obtain a first transformation mode, wherein the first transformation mode is determined based on the R second registration points and the N first registration points; and the processing unit is further configured to: determine third data based on the first transformation mode and the second data; and fuse the third data and the second sensing data; or

the processing unit is further configured to fuse the second data and the second sensing data, wherein the second data is determined by the first apparatus based on the R second registration points, the N first registration points, and the M pieces of first data.

29. The apparatus according to any one of claims 25 to 28, wherein the Q first categories are determined by the first apparatus and/or a second apparatus or are predefined.

30. The apparatus according to any one of claims 26 to 28, wherein the T third categories are determined by the first apparatus and/or a second apparatus or are predefined.

31. The apparatus according to claim 28, wherein the receiving unit receives the second data based on a first periodicity, and obtains the N first registration points based on a second periodicity; or
receives the second data based on a first periodicity, and obtains the first transformation mode based on a second periodicity.

32. The apparatus according to any one of claims 25 to 31, wherein the M pieces of first data correspond to D categories, and D is less than C.

33. A data transmission apparatus, wherein the data transmission apparatus comprises a processor and a storage medium, the storage medium stores instructions, and when the instructions are run by the processor, the method according to any one of claims 1 to 8 is implemented, or the method according to any one of claims 9 to 16 is implemented.

34. A computer-readable storage medium, wherein the computer-readable storage medium comprises instructions, and when the instructions are run by a processor, the method according to any one of claims 1 to 8 is implemented, or the method according to any one of claims 9 to 16 is implemented.

35. A computer program product, wherein the computer program product comprises instructions, and when the instructions are run by a processor, the method according to any one of claims 1 to 8 is implemented, or the method according to any one of claims 9 to 16 is implemented.

36. A data transmission system, wherein the data transmission system comprises a unit or a module configured to perform the method according to any one of claims 1 to 8 and a unit or a module configured to perform the method according to any one of claims 9 to 16.

Sensing
device 1

Sensing device 2

Sensing device 3

Sensing/Imaging
result

Sensing/Imaging
result

Sensing/Imaging
result

Information fusion

Sensing
center

**FIG. 1**

100

| First apparatus | | Second apparatus |

Q first categories

S111: Obtain the Q first categories

S112: Obtain S pieces of first sensing
data

S113: Determine M pieces of first data
from the S pieces of first sensing data
based on the Q first categories

S114: Send second data

S121: Receive the second data

**FIG. 2**

200

```
┌─────────────────┐                              ┌──────────────────┐
│ First apparatus │                              │ Second apparatus │
└─────────────────┘                              └──────────────────┘
```

Q first categories/P second categories/T third categories

S211: Obtain the Q first categories

S212: Obtain S pieces of first sensing data

S213: Determine M pieces of first data from the S pieces of first sensing data based on the Q first categories

S221: Obtain second sensing data

S214: Send second data

S215: Obtain the P second categories

S222: Receive the second data

S216: Determine N first registration points from the first sensing data based on the P second categories

S223: Obtain the T third categories

S224: Determine R second registration points from the second sensing data based on the T third categories

S217: Send the N first registration points

S225: Receive the N first registration points

S226: Determine third data based on the R second registration points, the N first registration points, and the second data

S227: Fuse the third data and the second sensing data

FIG. 3

300

```
┌─────────────────┐                              ┌──────────────────┐
│ First apparatus │                              │ Second apparatus │
└─────────────────┘                              └──────────────────┘
```

Q first categories/P second categories/T third categories

S311: Obtain the Q first categories

S312: Obtain S pieces of first sensing data

S313: Determine M pieces of first data from the S pieces of first sensing data based on the Q first categories

S321: Obtain second sensing data

S314: Send second data

S315: Obtain the P second categories

S322: Receive the second data

S323: Obtain the T third categories

S316: Determine N first registration points from the first sensing data based on the P second categories

S324: Determine R second registration points from the second sensing data based on the T third categories

S325: Send the R second registration points

S317: Obtain the R second registration points

S318: Determine a first transformation mode based on the R second registration points and the N first registration points

S319: Send the first transformation mode

S326: Obtain the first transformation mode

S327: Determine third data based on the first transformation mode and the second data

S328: Fuse the third data and the second sensing data

FIG. 4

400

```
┌─────────────────┐                          ┌──────────────────┐
│  First apparatus │                          │ Second apparatus │
└─────────────────┘                          └──────────────────┘
```

Q first categories/P second categories/T third
categories

S411: Obtain the Q first categories

S412: Obtain S pieces of first sensing
data

S413: Determine M pieces of first data
from the S pieces of first sensing data
based on the Q first categories

S421: Obtain second sensing data

S414: Obtain the P second categories

S422: Obtain the T third categories

S415: Determine N first registration
points from the first sensing data based
on the P second categories

S423: Determine R second registration
points from the second sensing data
based on the T third categories

S424: Send the R second registration points

S416: Obtain the R second registration
points

S417: Determine second data based on
the R second registration points, the N
first registration points, and the M pieces
of first data

S418: Send the second data

S425: Receive the second data

S426: Fuse the second data and the
second sensing data

FIG. 5

Data transmission apparatus 500

Interface unit 510

Processing unit 520

## FIG. 6

Data transmission apparatus 600

Interface unit 610

Processing unit 620

## FIG. 7

Data transmission apparatus 700

Processor 720

Transceiver 710

Memory 730

## FIG. 8

## INTERNATIONAL SEARCH REPORT

| International application No. |
|---|
| **PCT/CN2023/085712** |

**A.   CLASSIFICATION OF SUBJECT MATTER**

H04W28/06(2009.01)i

According to International Patent Classification (IPC) or to both national classification and IPC

**B.   FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, 3GPP: 数据, 类型, 类别, 种类, 筛选, 过滤, 选择, 选取, 感知, 传感器, 融合, 配准, data, type, filter, select, sensor, fuse, registry

**C.   DOCUMENTS CONSIDERED TO BE RELEVANT**

| Category* | Citation of document, with indication, where appropriate, of the relevant passages | Relevant to claim No. |
|---|---|---|
| X | CN 112233273 A (PLUSAI, INC.) 15 January 2021 (2021-01-15) description, paragraphs [0109]-[0173], [0222]-[0225], and [0265]-[0267] | 1-36 |
| X | CN 112069368 A (BEIJING HANGJI TECHNOLOGY CO., LTD.) 11 December 2020 (2020-12-11) description, paragraphs [0050], [0058], and [0063]-[0122] | 1-36 |
| A | CN 115842601 A (HUAWEI TECHNOLOGIES CO., LTD.) 24 March 2023 (2023-03-24) entire document | 1-36 |
| A | WO 2022247994 A1 (IAV GMBH INGENIEURGESELLSCHAFT AUTO UND VERKEHR) 01 December 2022 (2022-12-01) entire document | 1-36 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 December 2023** | **07 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2023/085712**

| Patent document cited in search report | | | Publication date (day/month/year) | Patent family member(s) | | | Publication date (day/month/year) |
|---|---|---|---|---|---|---|---|
| CN | 112233273 | A | 15 January 2021 | WO | 2022073388 | A1 | 14 April 2022 |
| CN | 112069368 | A | 11 December 2020 | WO | 2022048387 | A1 | 10 March 2022 |
| CN | 115842601 | A | 24 March 2023 | WO | 2023011381 | A1 | 09 February 2023 |
| WO | 2022247994 | A1 | 01 December 2022 | DE | 102021113651 | B3 | 04 August 2022 |

Form PCT/ISA/210 (patent family annex) (July 2022)